# EUROPÄISCHE PATENTANMELDUNG

(11) **EP 4 620 914 A1**
(43) Veröffentlichungstag der Anmeldung: **24.09.2025**
(21) Anmeldenummer: 24020088.1
(22) Anmeldetag: 20.03.2024
(51) Int. Cl.: C01C 1/04

(54) **VERFAHREN ZUM BETRIEB EINER AMMONIAKSYNTHESE IN TEILLAST SOWIE TEILLASTFÄHIGE AMMONIAKSYNTHESE**

(71) Anmelder: Linde GmbH, 82049 Pullach (DE); Technische Universität München, 80333 München (DE)
(72) Erfinder: Reinke, Michael, 82049 Pullach (DE); Kender, Robert, 82049 Pullach (DE); Fahr, Steffen, 80290 München (DE); Klein, Harald, 80290 München (DE)
(74) Vertreter: Fischer, Werner

(57) **Zusammenfassung**

Die Erfindung betrifft ein Verfahren sowie eine Vorrichtung zur Synthese von Ammoniak (8), bei dem ein Wasserstoff und Stickstoff umfassendes, mit zeitlich schwankendem Mengenstrom zugeführtes Gasgemisch (Make-up-Gas) (1) nach seiner Komprimierung in einem ersten Verdichter (Make-up-Gas-Verdichter) (V1) zur Bildung eines Ammoniaksynthesegases (3) bereitgestellt wird, das mit Hilfe eines zweiten Verdichters (Recycle-Verdichter) (V2) komprimiert und anschließend in einem Ammoniakreaktor (R) zu einem ammoniakhaltigen Syntheseprodukt (5) umgesetzt wird, von dem ein Wasserstoff und Stickstoff umfassendes Recyclegas (2) abgetrennt wird, um zur Bildung des Ammoniaksynthesegases (3) zurückgeführt zu werden. Kennzeichnend hierbei ist, dass ein Recycle-Verdichter (V2) eingesetzt wird, dessen Förderleistung unabhängig von der Förderleistung des Make-up-Gas-Verdichters (V1) einstellbar ist und der Mengenstrom des Recyclegases durch Veränderung der Förderleistung des Recycle-Verdichters (V2) so kontrolliert wird, dass der Druck im Ammoniakreaktor (R) stets innerhalb eines vorgegebenen Wertebereichs liegt.

## Beschreibung

Die Erfindung betrifft ein Verfahren zur Synthese von Ammoniak, bei dem ein Wasserstoff und Stickstoff umfassendes, mit zeitlich schwankendem Mengenstrom zugeführtes Gasgemisch (Make-up-Gas) nach seiner Komprimierung in einem ersten Verdichter (Make-up-Gas-Verdichter) zur Bildung eines Ammoniaksynthesegases bereitgestellt wird, das mit Hilfe eines zweiten Verdichters (Recycle-Verdichter) komprimiert und anschließend in einem Ammoniakreaktor zu einem ammoniakhaltigen Syntheseprodukt umgesetzt wird, von dem ein Wasserstoff und Stickstoff umfassendes Recyclegas abgetrennt wird, um zur Bildung des Ammoniaksynthesegases zurückgeführt zu werden.

Weiterhin betrifft die Erfindung eine Vorrichtung zur Durchführung des erfindungsgemäßen Verfahrens.

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es praktisch ausschließlich nach dem Haber-Bosch-Verfahren aus Stickstoff und Wasserstoff synthetisiert. Die dabei ablaufende Synthesereaktion

N₂ + 3H₂ ↔ 2NH₃

ist exotherm und volumenvermindernd, so dass sich das Reaktionsgleichgewicht mit fallender Temperatur und steigendem Druck zur Seite des Ammoniaks verschiebt.

Beim Haber-Bosch-Verfahren wird ein vorwiegend aus Wasserstoff und Stickstoff bestehendes Ammoniaksynthesegas, in dem die beiden Stoffe in dem für die Synthese von Ammoniak stöchiometrischen Verhältnis von 3:1 vorliegen, mit einem Druck zwischen 80 und 300bar und einer Temperatur zwischen 300 und 450°C einem Ammoniakreaktor zugeführt, wo es mit katalytischer Unterstützung unter Bildung von Ammoniak zu einem Syntheseprodukt umgesetzt wird, das neben Ammoniak auch erhebliche Wasserstoff- und Stickstoffanteile enthält. Mit einer Temperatur zwischen 400 und 470°C verlässt das Syntheseprodukt den Ammoniakreaktor und wird nachfolgend in einer Reihe von Wärmeübertragern abgekühlt, um Ammoniak auszukondensieren und in einem Abscheider von einem weitgehend aus Wasserstoff und Stickstoff bestehenden, Reste nicht auskondensierten Ammoniaks enthaltenden Recyclegas abzutrennen, das über eine Rückführleitung, die den Ammoniakreaktor und den Abscheider zu einem Synthesekreislauf verbindet, zur Erhöhung der Ammoniakausbeute zurückgeführt und dabei mit einem Wasserstoff und Stickstoff umfassenden Make-up-Gas zum Ammoniaksynthesegas gemischt wird.

Zum Antrieb des Synthesekreislaufs wird gewöhnlich ein Verdichter eingesetzt, der eine als Make-up-Gas-Verdichter bezeichnete Eingangs- und eine als Recycle-Verdichter bezeichnete Ausgangsstufe aufweist, die seriell von dem zu verdichtenden Gas durchströmt werden. Das Make-up-Gas wird dem Verdichter über die Saugseite des Make-up-Gas-Verdichters zugeführt, während das Recyclegas stromaufwärts des Recycle- und stromabwärts des Make-up-Gas-Verdichters eingeleitet und mit dem bereits verdichteten Make-up-Gas zum Ammoniaksynthesegas gemischt wird. Recycle- und Make-up-Gas-Verdichter sind starr miteinander gekoppelt und ihre Förderleistungen können nicht unabhängig voneinander verändert werden. Jede der Verdichterstufen kann z.B. im Falle eines Turbonverdichters aus einem oder mehreren Rotor/Stator-Paaren bestehen.

Üblicherweise sind Ammoniakreaktoren als adiabate Mehrbettrektoren ausgeführt, die wenigstens zwei strömungstechnisch miteinander verbundene Katalysatorbetten umfassen, die seriell von Ammoniaksynthesegas, das dabei schrittweise zum Syntheseprodukt umgesetzt wird, durchströmt werden können. Nach dem ersten und vor jedem weiteren Katalysatorbett ist jeweils eine Kühleinrichtung angeordnet, über die Reaktionswärme aus dem durch Umsetzung im vorgeschalteten Katalysatorbett erhaltenen Gasgemisch abgeführt wird, um es abgekühlt zur weiteren Umsetzung in das nachgeschaltete Katalysatorbett weiterzuführen. Als Kühlmittel bei einer derartigen Zwischenkühlung dient anzuwärmendes nicht umgesetztes Ammoniaksynthesegas. Je nachdem, ob die Wärme dabei direkt oder indirekt auf das Ammoniaksynthesegas übertragbar ist, spricht man in Fachkreisen von Adiabatic-Quench-Cooling- oder AQC-Reaktoren bzw. Adiabatic-Indirect-Cooling- oder AIC-Reaktoren.

Der für die Bildung des Make-up-Gases benötigte Wasserstoff wird heute noch überwiegend aus Kohlenwasserstoffen gewonnen, die hierbei unter Entstehung von Kohlendioxid zu einem wasserstoffreichen Synthesegas reformiert werden. Das klimaschädliche Kohlendioxid wird abgetrennt und entweder in die Atmosphäre freigesetzt oder mit großem finanziellem und apparativem Aufwand durch Sequestrierung entsorgt.

Um diese Nachteile zu überwinden, werden in letzter Zeit verstärkt Anstrengungen unternommen, Wasserstoff kohlendioxidfrei beispielsweise durch elektrochemische Zerlegung von Wasser unter Verwendung eines Elektrolyseurs zu gewinnen und zur Bildung des Make-up-Gases einzusetzen. Die insgesamt für die Ammoniakerzeugung benötigte elektrische Energie wird dabei direkt aus regenerativen Quellen wie Wind- oder Solarkraftwerken, oder als Überschussstrom aus dem öffentlichen Netz bezogen, weshalb sie nicht mit konstanter Leistung zur Verfügung steht. Da sich der Betrieb des Elektrolyseurs und einer evtl. zur Stickstofferzeugung eingesetzten Luftzerlegungsanlage relativ einfach und schnell an sich ändernde Betriebsbedingungen anpassen lassen und die Produktionsmengen von Wasserstoff und Stickstoff in erster Näherung proportional zur eingesetzten elektrischen Leistung sind, variieren die Mengenströme des im Elektrolyseur produzierten Wasserstoffs und des in der Luftzerlegungsanlage erzeugten Stickstoffs mit der Menge der verfügbaren elektrischen Energie. Entsprechend erreichen die Mengenströme des Make-up- und des Ammoniaksynthesegases häufig und über längere Zeiträume weniger als die Hälfte der Werte, die für einen Volllastbetrieb des Ammoniakreaktors erforderlich sind.

Im Gegensatz zum Elektrolyseur und zu einer ggf. zur Stickstoffgewinnung eingesetzten Luftzerlegungsanlage, passt sich der Ammoniakreaktor und der mit ihm verbundene Synthesekreislauf nur sehr langsam und begrenzt an sich ändernde Betriebsbedingungen an. Eine Änderung der Reaktionsbedingungen eilt einer Reduzierung der zugeführten Menge an Make-up-Gas stets hinterher. Dies führt dazu, dass für einen gewissen Zeitraum weniger Make-up-Gas dem Synthesekreislauf zugeführt wird, als im Synthesereaktor umgesetzt und über den Abscheider als flüssiges Ammoniak abgeführt wird. Entsprechend der dadurch abnehmenden Stoffmenge sinkt der Druck im Synthesekreislauf. Wird der zugeführte Strom an Make-up-Gas nicht weiter verringert stellt sich ein neuer stationärer Betriebspunkt bei verringertem Druck ein. Beispielsweise kann eine Absenkung der Ammoniaksynthesegasmenge auf 1 0% des Volllastwertes eine Reduzierung des Drucks im Ammoniakreaktor um bis zu 50% zur Folge haben.

Übermäßige und häufige Druckabsenkungen führen zu einer starken mechanischen Beanspruchung des gesamten Synthesekreislaufs, was eine spezielle Auslegung der Komponenten im Synthesekreislauf für häufige Druckwechsel zur Folge hat. Diese ist insbesondere für den Ammoniakreaktor nur mit hohen zusätzlichen Investitionen durchführbar. Unterschreitet die zuführbare Menge an Ammoniaksynthesegas einen Mindestwert, der gewöhnlich bei ca. 30% des Wertes bei Volllast liegt, wird daher nach dem Stand der Technik die Produktion unterbrochen und der Ammoniakreaktor abgeschaltet.

Um das Abschalten des Ammoniakreaktors zu vermeiden, schlägt beispielsweise die Patentanmeldung WO2012/037571 A2 vor, in Stromüberschusszeiten, in denen der Elektrolyseur mehr Wasserstoff und die Luftzerlegungsanlage mehr Stickstoff produziert, als im Ammoniakreaktor verbraucht werden kann, Wasserstoff und Stickstoff in Puffertanks zu speichern und in Strommangelzeiten dazu einzusetzen, Ammoniaksynthesegas mit einem oberhalb des Mindestwertes liegenden Mengenstrom zu bilden. Um lang andauernde Strommangelzeiten überbrücken zu können, müssen die Puffertanks allerdings entsprechend groß und kostspielig ausgeführt werden.

Die vorliegende Erfindung stellt sich die Aufgabe, ein Verfahren sowie eine Vorrichtung der gattungsgemäßen Art anzugeben, durch die ein Abschalten des Ammoniakreaktors vermieden und die Ermüdung des Synthesekreislaufs durch Druckwechselbelastung gegenüber dem Stand der Technik vermindert werden kann.

Die gestellte Aufgabe wird verfahrensseitig erfindungsgemäß dadurch gelöst, dass ein Recycle-Verdichter eingesetzt wird, dessen Förderleistung unabhängig von der Förderleistung des Make-up-Gas-Verdichters einstellbar ist und der Mengenstrom des Recyclegases durch Veränderung der Förderleistung des Recycle-Verdichters so kontrolliert wird, dass der Druck im Ammoniakreaktor stets innerhalb eines vorgegebenen Wertebereichs liegt.

Steht weniger Make-up-Gas zur Verfügung, als für einen Volllastbetrieb des Ammoniakreaktors benötigt wird, wird die Förderleistung des Recycle-Verdichters reduziert. Hierdurch verringert sich der Durchfluss durch den Ammoniakreaktor stärker, als es allein aufgrund der reduzierten Menge an Make-up-Gas der Fall wäre. Da die Reaktionsrate, die den Anteil des eingesetzten Eduktstroms angibt, der bei einem einmaligen Durchlauf des Ammoniakreaktors zu Ammoniak umgesetzt wird, durch das druckabhängige Reaktionsgleichgewicht limitiert ist, kann sie sich nicht ausreichend erhöhen, um die reduzierte Eduktzufuhr zum Reaktor auszugleichen. Folglich wird die Reaktionsrate herabgesetzt, so dass bei einer Verringerung der Anlagenlast der Druck im Synthesekreislauf weniger stark abnimmt als ohne die Reduzierung der Förderleistung des Recycle-Verdichters, bzw. konstant bleibt oder sich sogar erhöht.

Durch das erfindungsgemäße Verfahren kann eine Druckabsenkung im Ammoniakreaktor sowie anderen Teilen des Synthesekreislaufs bei einer Verminderung der Anlagenlast um bis zu 95% vermieden oder zumindest gegenüber dem Stand der Technik deutlich reduziert werden. Schwankungen der Menge des zur Verfügung stehenden Make-up-Gases haben daher keine oder nur geringe mechanische Belastungen der zur Ammoniaksynthese eingesetzten Vorrichtung zur Folge. Insbesondere der Ammoniakreaktor wird weniger stark beansprucht und kann somit kostengünstiger ausgeführt werden. Ein Abschalten des Ammoniakreaktors ist erst erforderlich, wenn die Anlagenlast auf unter 5% der Volllast sinkt.

Insbesondere beim Einsatz eines AIC- oder eines AQC-Reaktors kann es nach dem Stand der Technik im Teillastbetrieb zu einem Erlöschen der exothermen Synthesereaktion kommen, die bei einer übermäßigen Druckabnahme so stark gehemmt wird, dass die freiwerdende Reaktionswärme nicht mehr dazu ausreicht, den Eduktstrom vor seinem Eintritt in das erste Katalysatorbett die erforderliche Aktivierungsenergie zuzuführen.

Das erfindungsgemäße Verfahren wirkt diesem nachteiligen Effekt entgegen, da die freiwerdende Reaktionswärme bei dem gegenüber dem Stand der Technik erhöhten Druck zu einem stärkeren Temperaturanstieg im Ammoniakreaktor führt und der verringerte Durchfluss im Synthesekreislauf eine effektivere Wärmerückgewinnung in sämtlichen Zwischenkühlern des Ammoniakreaktors sowie in anderen Wärmeübertragern zur Folge hat. Darüber hinaus läuft die Synthesereaktion wegen der längeren Verweilzeit des Eduktstroms in den Katalysatorbetten des Ammoniakreaktors auch bei vergleichsweise geringen Eintrittstemperaturen nahezu bis zum Gleichgewicht ab.

Die Fördermenge des Recycle-Verdichters kann durch das Bedienpersonal verstellt werden, das dabei darauf achtet, den Druck im Ammoniakreaktor in dem vorgegebenen Wertebereich zu halten. Eine solche Lösung ist vor allem dann sinnvoll, wenn sich der Mengenstrom des Make-up-Gases nur selten und langsam ändert.

Bevorzugt ist der Recycle-Verdichter jedoch mit einer elektronisch ansteuerbaren Verstelleinrichtung versehen und als Stellglied in einen Regelkreis eingebunden, mit dem der Reaktordruck ohne menschlichen Eingriff automatisch in dem vorgegebenen Wertebereich gehalten wird. Mit besonderem Vorteil kann ein PID-Regelkreis eingesetzt werden, mit dem der Reaktordruck ohne bleibende Regelabweichung auf einem vorgegebenen Sollwert gehalten werden kann.

Zur Reduzierung der Druckschwankungen im Synthesekreislauf bei Verringerung der Anlagenlast kann optional auch ein erweitertes Regelungskonzept (z.B. Kaskadenregelung, Split-Range-Regelung) eingesetzt werden, für deren Ausführung der oben genannte PID-Regelkreis notwendig ist. Ebenfalls kann ein übergeordnetes Regelungskonzept (z.B. Feed-Forward-Regelung, modellprädiktive Regelung) eingesetzt werden, in welchem ein Zusammenhang zwischen der Anlagenlast, dem Durchfluss im Synthesekreislauf und dem sich im Ammoniakreaktor einstellenden Druck hinterlegt ist. Auch hier ist der oben genannte PID-Regelkreis notwendig, um ein solches Regelungskonzept auszuführen und zu nutzen.

Während des Volllastbetriebs wird der Recycle-Verdichter mit einer hierfür festgelegten Förderleistung betrieben. Ausgehend von diesem Volllastwert kann die Förderleistung verringert werden, sobald der Druck im Ammoniakreaktor kleiner als der Druck bei Volllast ist. Möglich ist es aber auch, die Förderleistung des Recycle-Verdichters erst dann zu verringern, wenn der Druck einen vorgegebenen, unterhalb des Volllastdrucks liegenden Schwellwert unterschreitet. Bei Bedarf kann die Förderleistung auch über den Volllastwert hinaus vergrößert werden.

Das erfindungsgemäße Verfahren wird sinnvollerweise so durchgeführt, dass der Druck im Ammoniakreaktor einen durch entsprechende Regelwerke, wie insbesondere den Code ASME VIII/2 oder die DIN EN 13445-3 bestimmten Grenzwert nicht unterschreitet, so dass eine Druckwechselauslegung der Komponenten des Synthesekreislaufs, welche mit erhöhten Investitionskosten verbunden wäre, vermieden wird.

Weiterhin betrifft die Erfindung eine Vorrichtung zur Synthese von Ammoniak, mit einem Ammoniakreaktor, der mit einem Abscheider, einer Rückführleitung, einer Mischeinrichtung sowie einem Verdichter (Recycle-Verdichter) einen Synthesekreislauf bildet, wobei der Recycle-Verdichter über die Mischeinrichtung mit einem weiteren Verdichter (Make-up-Gas-Verdichter) verbunden ist, mit dem ein Wasserstoff und Stickstoff umfassendes Gasgemisch (Make-up-Gas) mit zeitlich schwankendem Mengenstrom der Mischeinrichtung zugeführt werden kann, um ein Ammoniaksynthesegas zu bilden, das über den Recycle-Verdichter in den Ammoniakreaktor zur Umsetzung in ein ammoniakhaltiges Syntheseprodukt weiterleitbar ist, von dem im Abscheider ein Wasserstoff und Stickstoff umfassendes Recyclegas abgetrennt werden kann, um über die Rückführleitung der Mischeinrichtung zugeführt zu werden.

Vorrichtungsseitig wird die gestellte Aufgabe dadurch gelöst, dass die Förderleistung des Recycle-Verdichters unabhängig von der Förderleistung des Make-up-Gas-Verdichters einstellbar ist und der Mengenstrom des Recyclegases über die Förderleistung des Recycle-Verdichter so kontrolliert werden kann, dass der Druck im Ammoniakreaktor stets innerhalb eines vorgegebenen Wertebereichs liegt.

In einer bevorzugten Ausgestaltung ist der Recycle-Verdichter der erfindungsgemäßen Vorrichtung mit einer elektronisch ansteuerbaren Verstelleinrichtung ausgestattet und in einen Regelkreis eingebunden, der dazu eingerichtet ist, den Druck im Ammoniakreaktor automatisch in dem vorgegebenen Wertebereich zu halten. Besonders bevorzugt ist der Recycle-Verdichter Teil eines PID-Regelkreises, der es ermöglicht, den Reaktordruck ohne bleibende Regelabweichung auf einem vorgegebenen Sollwert zu halten.

Sowohl bei dem Make-up-Gas- als auch dem Recycle-Verdichter handelt es sich bevorzugt um einen aus dem Stand der Technik bekannten Turbo-, Schrauben- oder Kolbenverdichter.

Der Make-up-Gas-Verdichter kann die Eingangsstufe eines größeren Verdichters mit mehreren Verdichterstufen sein, dessen Ausgangsstufe der Recycle-Verdichter ist. Der Verdichter ist sinnvollerweise mit einem Antriebsaggregat ausgeführt, über das der Make-up-Gas- und der Recycle-Verdichter gemeinsam angetrieben werden.

Möglich ist es auch, Make-up-Gas- und Recycle-Verdichter als eigenständige Maschinen auszuführen, von denen jede über ein eigenes Antriebsaggregat verfügt. Um die Förderleistungen der beiden Verdichter in dieser Variante unabhängig voneinander einstellen zu können, ist zumindest der Antrieb des Recycle-Verdichters vorzugsweise mit einem Frequenzumrichter ausgestattet.

Recycle- und Make-up-Gas-Verdichter können alternativ oder zusätzlich über ein verstellbares Getriebe verbunden sein, das es erlaubt, die Förderleistung des Recycle-Verdichters unabhängig von der Förderleistung des Make-up-Gas-Verdichters über seine Antriebsgeschwindigkeit zu verändern. Darüber hinaus kann der Recycle-Verdichter mit einem Mechanismus wie beispielsweise einer Leitschaufelverstellung ausgeführt sein, die ebenfalls die unabhängige Einstellung seiner Förderleistung ermöglicht.

Weiterhin kann der Recycle-Verdichter aus mehreren parallel betreibbaren Verdichtern bestehen, die gemeinsam die maximal benötigte Förderleistung liefern (z.B. zwei Verdichter, die jeweils 50% oder drei Verdichter, die jeweils 33,3% oder auch zwei Verdichter, von denen der eine 40% und der andere 60% der Förderleistung bereitstellen kann). Die Einstellung der Förderleistung des Recycle-Verdichters kann durch Zu- oder Abschalten eines oder mehrerer seiner Verdichter erfolgen.

Die Mischeinrichtung ist im einfachsten Fall als Rohrstück ausgeführt, das jeweils eine Eintrittsöffnung für das Make-up- und das Recyclegas sowie eine Austrittsöffnung für das Ammoniaksynthesegas aufweist.

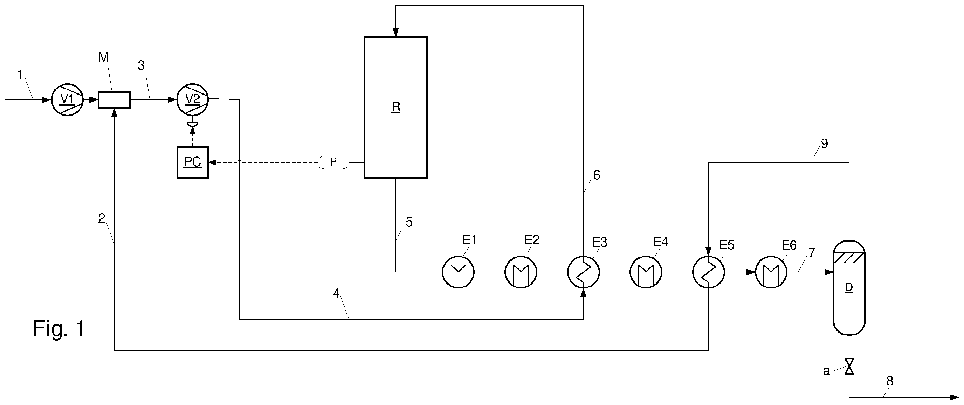

Im Folgenden soll die Erfindung anhand eines in der **Figur 1** schematisch dargestellten Ausführungsbeispiels näher erläutert werden.

Die Figur 1 zeigt eine erfindungsgemäße Ammoniaksynthese, der Make-up-Gas mit zeitlich schwankendem Mengenstrom zugeführt wird.

Der Druck des aus Wasserstoff und Stickstoff bestehenden, aus einer nicht dargestellten Quelle mit zeitlich schwankendem Mengenstrom zugeführten Make-up-Gases 1 wird im Make-up-Gas-Verdichter V1 erhöht, ehe es in der Mischeinrichtung M mit dem wasserstoff- und stickstoffreichen Recyclegas 2 zum Ammoniaksynthesegas 3 zusammengeführt wird. Nach einer weiteren Druckerhöhung im Recycle-Verdichter V2, der mit dem Verdichter V1 mechanisch gekoppelt sein kann, wird das Ammoniaksynthesegas 4 im Wärmeübertrager E3 gegen das abzukühlende Syntheseprodukt 5 vorgewärmt, so dass es mit einer Temperatur zwischen 100 und 250°C, vorzugsweise zwischen 140 und 210°C als vorgewärmtes Ammoniaksynthesegas 6 zur Einleitung in den Ammoniakreaktor R bereitsteht. Im Ammoniakreaktor R wird das Ammoniaksynthesegas 6 ggf. weiter angewärmt und anschließend bei einem Druck zwischen 80 und 300 bar mit katalytischer Unterstützung zu dem ammoniakhaltigen, nicht umgesetzten Wasserstoff und Stickstoff umfassenden Syntheseprodukt 5 umgesetzt, das den Ammoniakreaktor R mit einer Temperatur zwischen 400 und 470°C verlässt. In mehreren Kühlstufen E1-E6 wird das Syntheseprodukt 5 bis unter den Ammoniaktaupunkt abgekühlt, wobei ein Großteil des enthaltenen Ammoniaks auskondensiert und ein zweiphasiges Stoffgemisch 7 entsteht, das im Abscheider D in eine weitgehend aus Ammoniak bestehende Flüssigfraktion 8 sowie eine, nicht auskondensiertes Ammoniak und nicht umgesetzten Wasserstoff und Stickstoff enthaltende Gasfraktion 9 getrennt wird. Während die Flüssigfraktion 8 über das Drosselorgan a als Ammoniakprodukt abgezogen wird, wird die Gasfraktion 9 im Wärmeübertrager E4 gegen das abzukühlende Syntheseprodukt 5 angewärmt und als Recyclegas 2 zur Mischeinrichtung M zurückgeführt.

Steht das Make-up-Gas 1 mit einem Mengenstrom zur Verfügung, der nicht dazu ausreicht, den Ammoniakreaktor R in Volllast betreiben zu können, wird dem Synthesekreislauf für einen gewissen Zeitraum weniger Make-up-Gas 1 zugeführt als im Ammoniakreaktor R umgesetzt und über den Abscheider D als flüssiges Ammoniak abgeführt wird, wodurch der Druck im Ammoniakreaktor R abfällt. Um dem Druckabfall entgegenzuwirken, wird der durch den Drucksensor P gemessene Reaktordruck mit einem im Regler PC hinterlegten Sollwert verglichen, woraus sich ein Stellsignal ergibt, das der Regler PC an den mit einer elektronisch ansteuerbaren Verstelleinrichtung ausgestatten Recycle-Verdichter V2 übermittelt, um dessen Förderleistung zu verkleinern und so den Durchfluss durch den Ammoniakreaktor stärker zu verringern, als es alleine aufgrund der reduzierten Menge an Make-up-Gas 1 der Fall wäre.

Da die Reaktionsrate, die den Anteil des eingesetzten Ammoniaksynthesegases 4 angibt, der bei einem einmaligen Durchlauf des Ammoniakreaktors zu Ammoniak umgesetzt wird, durch das druckabhängige Reaktionsgleichgewicht limitiert ist, kann sie sich nicht ausreichend erhöhen, um die reduzierte Menge an Ammoniaksynthesegas 4 auszugleichen. Folglich wird die Reaktionsrate herabgesetzt, so dass bei einer Verringerung der Anlagenlast der Druck im Synthesekreislauf weniger stark abnimmt als ohne die Reduzierung der Förderleistung des Recycle-Verdichters V2, bzw. konstant bleibt oder sich sogar erhöht.

## Patentansprüche

1. Verfahren zur Synthese von Ammoniak (8), bei dem ein Wasserstoff und Stickstoff umfassendes, mit zeitlich schwankendem Mengenstrom zugeführtes Gasgemisch (Make-up-Gas) (1) nach seiner Komprimierung in einem ersten Verdichter (Make-up-Gas-Verdichter) (V1) zur Bildung eines Ammoniaksynthesegases (3) bereitgestellt wird, das mit Hilfe eines zweiten Verdichters (Recycle-Verdichter) (V2) komprimiert und anschließend in einem Ammoniakreaktor (R) zu einem ammoniakhaltigen Syntheseprodukt (5) umgesetzt wird, von dem ein Wasserstoff und Stickstoff umfassendes Recyclegas (2) abgetrennt wird, um zur Bildung des Ammoniaksynthesegases (3) zurückgeführt zu werden, **dadurch gekennzeichnet, dass** ein Recycle-Verdichter (V2) eingesetzt wird, dessen Förderleistung unabhängig von der Förderleistung des Make-up-Gas-Verdichters (V1) einstellbar ist und der Mengenstrom des Recyclegases durch Veränderung der Förderleistung des Recycle-Verdichters (V2) so kontrolliert wird, dass der Druck im Ammoniakreaktor (R) stets innerhalb eines vorgegebenen Wertebereichs liegt.

2. Verfahren nach Anspruch 1, **dadurch gekennzeichnet, dass** der Druck im Ammoniakreaktor (R) über einen Regelkreis kontrolliert wird, in den der Recycle-Verdichter (V2) als Stellglied eingebunden ist.

3. Verfahren nach Anspruch 2, **dadurch gekennzeichnet, dass** der Druck im Ammoniakreaktor (R) mit einem PID-Regelkreis kontrolliert wird.

4. Verfahren nach Anspruch 3, **dadurch gekennzeichnet, dass** der Druck im Ammoniakreaktor (R) über eine Split-Range-Regelung kontrolliert wird.

5. Vorrichtung zur Synthese von Ammoniak (8), mit einem Ammoniakreaktor (R), der mit einem Abscheider (D), einer Rückführleitung (2), einer Mischeinrichtung (M) sowie einem Verdichter (Recycle-Verdichter) (V2) einen Synthesekreislauf bildet, wobei der Recycle-Verdichter (V2) über die Mischeinrichtung (M) mit einem weiteren Verdichter (Make-up-Gas-Verdichter) (V1) verbunden ist, mit dem ein Wasserstoff und Stickstoff umfassendes Gasgemisch (Make-up-Gas) (1) mit zeitlich schwankendem Mengenstrom der Mischeinrichtung (M) zugeführt werden kann, um ein Ammoniaksynthesegas (3) zu bilden, das über den Recycle-Verdichter (V2) in den Ammoniakreaktor (R) zur Umsetzung in ein ammoniakhaltiges Syntheseprodukt (5) weiterleitbar ist, von dem im Abscheider (D) ein Wasserstoff und Stickstoff umfassendes Recyclegas abgetrennt werden kann, um über die Rückführleitung (2) der Mischeinrichtung (M) zugeführt zu werden, **dadurch gekennzeichnet, dass** der Druck im Ammoniakreaktor (R) stets innerhalb eines vorgegebenen Wertebereichs liegt dass die Förderleistung des Recycle-Verdichters (V2) unabhängig von der Förderleistung des Make-up-Gas-Verdichters (V1) einstellbar ist und der Mengenstrom des Recyclegases (2) über die Förderleistung des Recycle-Verdichter (V2) so kontrolliert werden kann, dass der Druck im Ammoniakreaktor (R) stets innerhalb eines vorgegebenen Wertebereichs liegt.

6. Vorrichtung nach Anspruch 5, **dadurch gekennzeichnet, dass** der Recycle-Verdichters (V2) mit einer elektronisch ansteuerbaren Verstelleinrichtung versehen und als Stellglied in einen Regelkreis eingebunden ist.

7. Vorrichtung nach Anspruch 6, **dadurch gekennzeichnet, dass** der Regelkreis ein PID-Regelkreis ist.

8. Vorrichtung nach einem der Ansprüche 5 bis 7, **dadurch gekennzeichnet, dass** der Recycle-Verdichter (V2) ein Turbo-, Schrauben- oder Kolbenverdichter ist.

9. Vorrichtung nach einem der Ansprüche 5 bis 8, **dadurch gekennzeichnet, dass** der Make-up-Gas-Verdichter (V1) die Eingangsstufe eines größeren Verdichters ist, bei dessen Ausgangstufe es sich um den Recycle-Verdichter (V2) handelt.

10. Vorrichtung nach einem der Ansprüche 5 bis 8, **dadurch gekennzeichnet, dass** der Make-up- und der Recycle-Verdichter als eigenständige Maschinen ausgeführt sind.
